# EUROPEAN PATENT SPECIFICATION

(11) **EP 0 664 248 B1**
(45) Date of publication and mention of the grant of the patent: **12.05.1999**
(21) Application number: 95100628.7
(22) Date of filing: 18.01.1995
(51) Int. Cl.: B60T 11/30

(54) **Brake cylinder and air bleeding method thereof**
Bremszylinder und Entlüftungsmethode dafür
Cylindre de frein et méthode de désaérage pour un tel cylindre

(30) Priority: 21.01.1994 JP 21959/94
(43) Date of publication of application: 26.07.1995
(73) Proprietor: NISSHINBO INDUSTRIES, INC., Chuo-ku, Tokyo 103 (JP)
(72) Inventor: Furukawa, Masaaki, c/o Nisshinbo Ind. Inc., Nagoya-shi, Aichi (JP); Fujii, Hisanori, c/o Nisshinbo Ind. Inc., Nagoya-shi, Aichi (JP)
(74) Representative: Sajda, Wolf E., Dipl.-Phys.

(56) References cited:
- EP-A- 0 092 469
- DE-C- 713 937

## Description

The invention relates to a brake cylinder unit and a method for bleeding air from such a brake cylinder.

The published European application EP-A-0 092 469 discloses a brake cylinder arrangement comprising a cylinder body arranged vertically and having first and second cylinder cavities in an upper and lower portion thereof, respectively. A first and second pistons are housed to stroke in the first and second cylinder cavities, which are separated by a partition. A space formed between the first piston and the partition forms an upper fluid chamber and a space between the second piston and the partition forms a lower fluid chamber. Fluid passage is provided between the fluid chambers by means of a cylindrical rod having an interior bore, the rod penetrating the partition and providing fluid communication between the upper and lower fluid chambers.

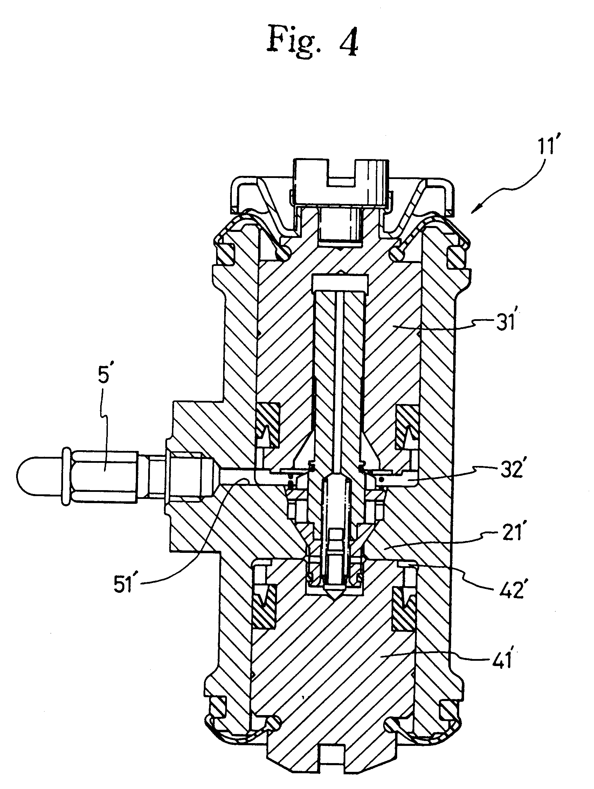

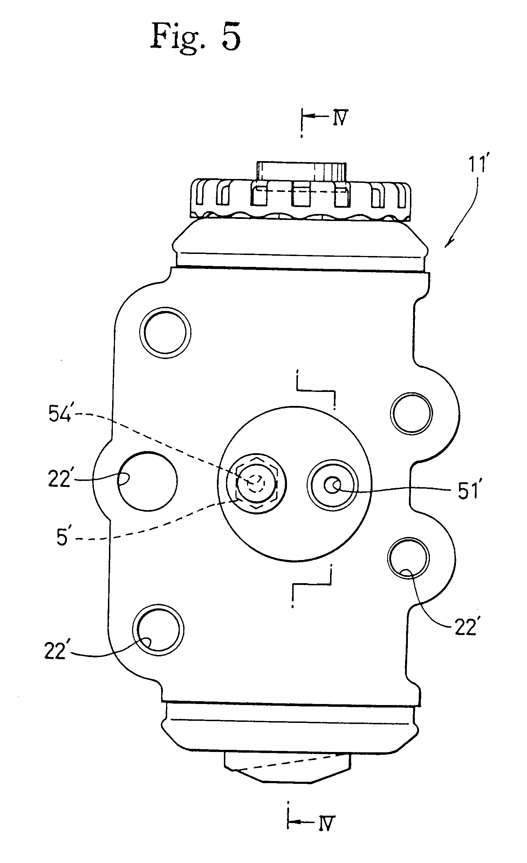

Another conventional brake cylinder is shown in Fig. 4 and Fig. 5 of the drawings wherein Fig. 4 is a cross-section along the lines IV to IV in Fig. 5. In this conventional brake cylinder, a drum brake cylinder 11' is mounted onto a back plate of the drum brake using a mounting hole 22' and fixing elements like bolts (not shown). The mounting of the conventional drum brake cylinder 11' is carried out in such a manner that a first piston 31' and a first fluid chamber 32' are provided on the upper side, whereas a second piston 41' and a second fluid chamber 42' will be on the lower side.

A brake fluid inlet line 51' and a brake fluid outlet line 54' are both connected to the first upper fluid chamber 32', whereas the second fluid chamber 42' positioned on the lower side is spaced from the first upper fluid chamber 32' by means of a partition 21' separating them.

Accordingly, when air is bled from the brake cylinder 11', the brake fluid introduced from the inlet line 51' expands in the first upper fluid chamber 32', and a portion of this fluid flows into the second lower fluid chamber 42' through a gap around the partition 21', and the air becomes mixed with the brake fluid inside the first and second fluid chambers 41' and 42' and elsewhere. The brake fluid containing this air is discharged from the first upper fluid chamber 32' via the outlet line 54'. For this purpose, an air bleeder 5' is loosened, and the brake fluid mixed with air is discharged in order to bleed the air.

In a conventional brake cylinder having such a structure, the following problems arise when bleeding air from the brake cylinder.
a) Even though brake fluid flows into the second lower fluid chamber 42', the flow of the brake fluid is very slow, because the second lower fluid chamber 42' is separated from the first upper fluid chamber 32' by the partition 21'. Due to this delayed flow of brake fluid into the corners, pockets of residual air are formed making it difficult to exhaust the air therefrom in an adequate manner.
b) In the brake cylinder 11', the brake fluid inlet line 51' and the brake fluid outlet line 54' both use the first upper fluid chamber 32', and in such a case the brake fluid cannot circulate adequately. In the second lower fluid chamber 42' the reciprocating movement of a portion of the fluid causes air to be trapped, and again the air contained therein cannot be bled sufficiently.

Accordingly, the object underlying the present invention is to provide an improved brake cylinder and an air bleeding method thereof by means of which air can be bled efficiently from the brake cylinder in order to achieve a reliable function of a brake equipped with such a brake cylinder.

According to the invention a brake cylinder unit is provided as defined in claim 1.

In the brake cylinder unit according to the invention, the brake cylinder comprises an automatic shoe clearance adjustment device which penetrates through the partition between the first upper fluid chamber and the second lower fluid chamber, which adjustment device has a fluid line with a passage inside the first fluid chamber and the second fluid chamber.

In the brake cylinder according to the invention an easy and complete exhaustion of air from the brake fluid is achieved in an efficient and reliable manner. Since the brake fluid inlet line is connected to the second lower fluid chamber, whereas the brake fluid outlet line is connected to the first upper fluid chamber, the brake fluid within the brake cylinder circulates from the bottom to the top which makes effective use of the property of air to rise. This motion facilitates the easy and complete exhaustion of the air.

Moreover, a method of bleeding air from a brake cylinder is provided according to the invention as defined in claim 3. In the method, the brake fluid is injected through the brake fluid inlet line into the lower second fluid chamber, is caused to flow through the second brake fluid chamber, then through a fluid line and thereafter via the first upper brake fluid chamber to the brake fluid outlet line. Hence, the air contained in the brake fluid can efficiently be expelled and exhausted from the brake cylinder.

The invention will be described in more detail by way of example and with reference to the accompanying drawings in which:
- Fig. 1: is a cross-section diagram of a first embodiment of the brake cylinder according to the invention taken along the lines I-I of Fig. 2;
- Fig. 2: is a side view, partially as a cross-section, of a dual-two-leading shoe type of a drum brake;
- Fig. 3: is a cross-section of a second embodiment of the brake cylinder according to the invention;
- Fig. 4: is a cross-section of a conventional brake cylinder along the lines IV-IV of Fig. 5;
- Fig. 5: is a planar diagram of a conventional brake cylinder.

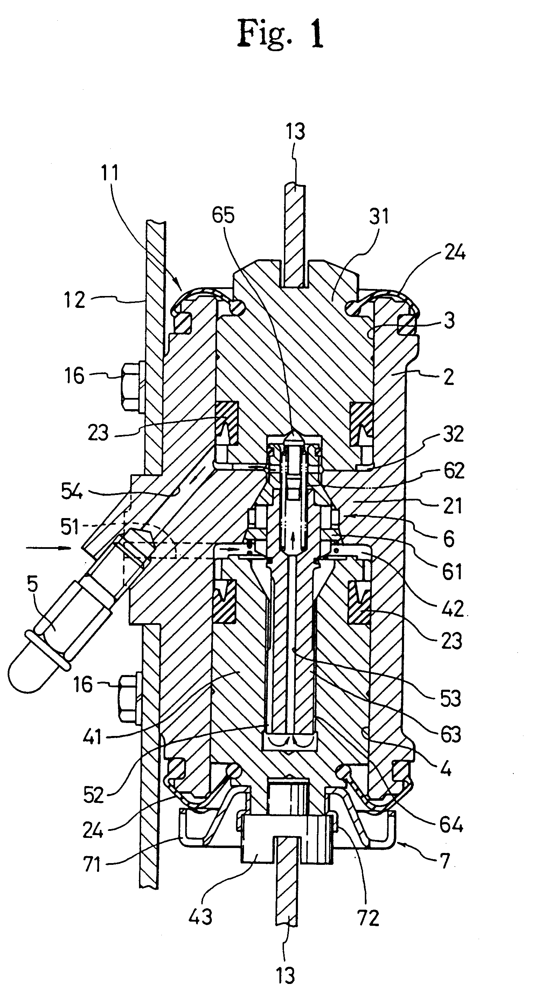

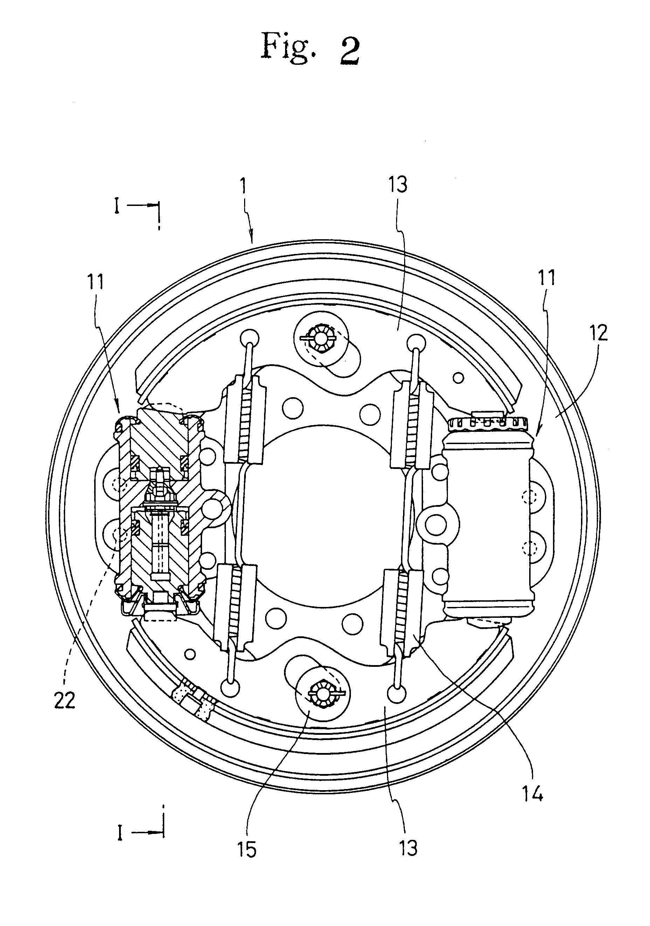

A first embodiment of the brake cylinder according to the invention will be explained below with reference to Fig. 1 and Fig. 2 of the drawings. In Fig. 2, a drum brake with corresponding brake cylinders is disclosed even though the invention is not limited to this type of brake.

### Drum brake

As shown in Fig. 2 of the drawings, the brake cylinder 11 is applicable to a dual-two-leading shoe drum brake. Such a drum brake 1 is affixed to a vehicle body by means of a back plate 12 and comprises a pair of brake shoes 13 which are secured to the back plate 12 by means of shoe anchors 15 and are mounted in such a manner that they are movable between the pair of left and right brake cylinders 11. A return spring 14 is provided which is tensioned between the brake shoes 13 and applies a contraction force to the brake shoes 13.

### Brake cylinders

As shown in detail in Fig. 1, each brake cylinder 11 is affixed to the back plate 12 by mounting bolts 16 which are bolted into corresponding mounting holes 22, see Fig. 2. The brake cylinder 11 comprises two cavities, namely a first upper cylinder cavity 3 and a second lower cylinder cavity 4 which are bored in the upper and the lower section, respectively, of a cylinder body 2. Two pistons, namely a first upper piston 31 and a second lower piston 41 are housed in the first upper cylinder cavity 3 and the second lower cylinder cavity 4, respectively in order to carry out a stroke therein. Two fluid chambers are provided, namely a first upper fluid chamber 32 and a second lower fluid chamber 42 which are formed by the first upper piston 31 and a partition 21 on the one hand, and the second lower piston 41 and the partition 21 on the other hand so that the two cylinder cavities are separated by the partition 21.

As shown in Fig. 1, the partition 21 is formed between and separates the first upper cylinder cavity 3 and the second lower cylinder cavity 4 and is provided with a boring inside the cylinder body 2. A piston cup 23 is fitted around the perimeter of the first upper piston 31 in order to form a fluid-tight first upper fluid chamber 32 as the first piston 31 strokes within the first upper cylinder cavity 3. Similarly, a further piston cup 23 is fitted around the perimeter of the second lower piston 41 to form a fluid-tight second lower fluid chamber 42 as the second piston 41 strokes within the second lower cylinder cavity 4. Boots 24 are provided for blocking each boundary between the cylinder body 2 and the first piston 31 and the second piston 41, respectively. Thus, dirt and other particles are prevented from penetrating into the brake cylinder 11.

### Automatic clearance adjustment device

As shown in Fig. 1, the brake cylinder 11 is equipped with an automatic brake clearance adjustment device 6. This adjustment device 6 comprises an adjustment shaft 63, a drive ring 61, a locator 65 and further components which are incorporated between the first upper piston 31 and the second lower piston 41. This adjustment device 6 automatically compensates for any gap formed between the brake shoes 13 and the brake drum (not shown) that naturally accompanies wear in the brake shoe.

In the adjustment device 6, the adjustment shaft 63 is screwed into a thread shell 64 molded at the shaft centre of the second lower piston 41, wherein one or more fluid lines 52 formed as grooves are molded into the adjustment shaft 63 in the axial direction thereof. In this respect, the grooved fluid line or fluid lines can be molded either into the adjustment shaft 63, the second lower piston 41 or both thereof.

Another interior fluid line 53 is bored into the adjustment shaft 63 in the axial direction thereof. A locator 65, a threaded material energized by a spring 62 and biased towards the first upper piston 31, is housed in an opening of the first upper piston 31 at its upper tip. Hence, the grooved fluid lines 52 and the interior axial fluid line 53 enable the brake fluid to flow down from the second lower fluid chamber 42 downwards along the adjustment shaft 63 and then upwards to the first upper fluid chamber 32.

As shown in Fig. 1 of the drawings, the brake cylinder of this embodiment is equipped with an adjustment ring 7 on which manual adjustment teeth 71 are molded and which is integrally attached to the second lower piston 41 by means of a clip 72. The clip 72 is mounted so that a piston head 43, which is interlocked to the brake shoe 13 by a groove at the tip, and the second lower piston 41 are mutually rotatable. The second lower piston 41 can project out from the cylinder body 2, or be reversed as necessary by manually rotating the manual adjustment teeth 71 in order to adjust the clearance of the brakes.

### Brake fluid inlet and outlet lines

The brake fluid inlet line 51 is molded to the cylinder body 2 and connected to the second lower fluid chamber 42 from the exterior of the brake cylinder 11 so that brake fluid is supplied into the second lower fluid chamber 42. During this supply, the brake fluid outlet line 54 connected to the first upper fluid chamber 32 discharges brake fluid to the outside of the brake cylinder 11. An air bleeder 5 which is screwed to a corresponding outlet port seals off the discharge of the brake fluid. Or, instead of an air bleeder 5, the inlet port of another cylinder can be connected with a tube to the outlet port to connect the cylinders in series.

### Air bleeding method

In order to bleed air from the brake cylinder 11, brake fluid is supplied and injected from the inlet line 51, and the air bleeder 5 is loosened. Then, the brake fluid passes through the inlet line 51 and expands and disperses inside the second lower fluid chamber 42, then passes through the respective grooved fluid lines 52 on the threaded shell 64 and/or the adjustment shaft 63 between the second lower piston 41 and the adjustment shaft 63, and then flows into the first upper fluid chamber 32 via the interior fluid line 53 inside of the adjustment shaft 63. During such a process, air contained in the brake fluid is transmitted with the brake fluid to the first upper fluid chamber 32. Finally, the brake fluid containing air is discharged from the first upper fluid chamber 32 to the brake fluid outlet line 54. Since air has the property of rising, any air trapped in the brake fluid can therefore efficiently be removed by a repeated transfer of the brake fluid from the second lower chamber to the first upper chamber.

### Modified embodiment

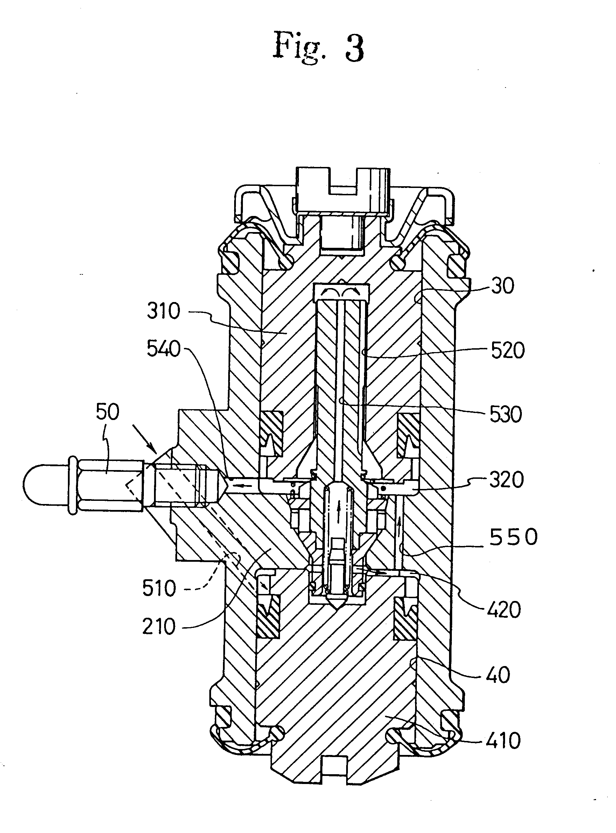

Another embodiment of the brake cylinder according to the invention is shown in Fig. 3. In this embodiment, the upper and lower brake cylinders according to Fig. 1 are reversed to switch the positions of an inlet line 510 and an outlet line 540. In a first upper cylinder cavity 30 a first upper piston 310 is accomodated, whereas in a second lower cylinder cavity 40 a second lower piston 410 is accomodated.

In the cavity formed by a cylinder body, a bore inside the partition 210 is provided to form a passage 550 between a first upper fluid chamber 320 and a second lower fluid chamber 420. This partition 210 functions as a partition fluid line 550 to facilitate the flow of brake fluid. In order to bleed air with this modified configuration, brake fluid is first injected into the second lower fluid chamber 420 via the brake fluid inlet line 510. Next, the brake fluid flows up into the first upper fluid chamber 320 by means of two fluid lines, namely a line formed by interior fluid lines 530 and one or more grooved fluid lines 520, and the partition fluid line 550. When using these lines in the described manner, brake fluid containing air is discharged outside of the brake cylinder via the brake fluid outlet line 540. An air bleeder 50 connected to the brake fluid outlet line 540 is operated in the same manner as the air bleeder 5 described above.

## Claims

1. A brake cylinder unit to be mounted substantially vertically in a drum brake device, comprising:
a cylinder body (2) with a first cylinder cavity (3, 30) in the upper portion of the cylinder body (2) and a second cylinder cavity (4, 40) in the lower portion of the cylinder body (2), wherein a first piston (31, 310) and a second piston (41, 410) are housed to stroke within the first cylinder cavity (3, 30) and the second cylinder cavity (4, 40), respectively;
a partition (21, 210) separating the first cylinder cavity (3, 30) from the second cylinder cavity (4, 40), wherein a space between the first piston (31, 310) and the partition (21, 210) forms an upper fluid chamber (32, 320) and a space between the second piston (41, 410) and the partition (21, 210) forms a lower fluid chamber (42, 420);
a fluid passage (52, 53, 520, 530) formed between the upper fluid chamber (32, 320) and the lower fluid chamber (42, 420);
a brake fluid inlet line (51, 510) and a brake fluid outlet line (54, 540) for supplying and discharging brake fluid to and from the fluid chambers (42, 420; 32, 320),
characterized in that
the brake fluid inlet line (51, 510) is connected to the lower fluid chamber (42, 420) and the brake fluid outlet line (54, 540) is connected to the upper fluid chamber (32, 320),
an automatic shoe clearance adjustment device (6) is disposed along the centre axis of the cylinder body (2) which penetrates through the partition and comprises an adjustment shaft (63) screwed into the second piston (41), or the first piston (310),
the fluid passage comprises an axial groove (52, 520) along the outer surface of the adjustment shaft (63) and/or along the surrounding wall thereof and an interior bore (53, 530) along the centre axis of the adjustment shaft (63),
wherein the bottom end of the interior bore (53, 530) communicates with the fluid inlet line (51, 510) via the lower fluid chamber (42, 420) and the top end communicates with the fluid outlet line (54, 540) via the upper fluid chamber (32, 320).

2. The brake cylinder unit according to Claim 1, wherein the fluid passage (520, 530) between the upper fluid chamber (320) and the lower fluid chamber (420) further comprises a fluid line (550) through the partition (210) between the first cylinder cavity (30) and the second cylinder cavity (40), the fluid line (550) disposed parallel to but spaced apart from the centre axis of the cylinder body (2).

3. A method of bleeding air from a brake cylinder unit mounted substantially vertically in a drum brake device, the brake cylinder unit comprising a cylinder body (2) with a first cylinder cavity (3, 30) and a second cylinder cavity (4, 40) in the upper and lower portions of the cylinder body (2), respectively, a first piston (31, 310) and a second piston (41, 410) housed to stroke within the first and second cylinder cavities (3, 30; 4, 40), respectively, a partition (21, 210) separating the first and second cylinder cavities (3, 30; 4, 40), wherein the space between the first piston (31, 310) and the partition (21, 210) forms an upper fluid chamber (32, 320) and the space between the second piston (41, 410) and the partition (21, 210) forms a lower fluid chamber (42, 420), and an automatic shoe clearance adjustment device (6) disposed along the centre axis of the cylinder body which penetrates through the partition (21, 210) and comprises an adjustment shaft (63), a fluid passage (52, 53, 520, 530) being provided in the adjustment shaft (63) to allow fluid communication between the upper fluid chamber (32, 320) and the lower fluid chamber (42, 420),
the air bleeding method comprising the steps of:
a) supplying brake fluid through a brake fluid inlet line (51, 510) into the cylinder body (2) of the brake cylinder unit,
b) causing the brake fluid to flow downwards into the lower fluid chamber (42, 420) to a first fluid level below the inlet port of the brake fluid inlet line (51, 510),
c) causing the brake fluid to flow upwardly through the fluid passage (52, 53, 520, 530, 550) from the lower fluid chamber (42, 420) to the upper fluid chamber (32, 320) to reach a second fluid level higher than the first fluid level,
d) discharging the brake fluid from the upper fluid chamber (32, 320) at the higher second fluid level through a brake fluid outlet line (54, 540) having an air bleeder (5, 50) connected thereto,
wherein air contained in the brake fluid is exhausted from the brake cylinder.

## Patentansprüche

1. Bremszylindereinheit, die im wesentlichen senkrecht in einer Trommelbremsvorrichtung anzubringen ist, wobei die Bremszylindereinheit folgendes aufweist:
- einen Zylinderkörper (2) mit einem ersten Zylinderhohlraum (3, 20) in dem oberen Bereich des Zylinderkörpers (2) und mit einem zweiten Zylinderhohlraum (4, 40) in dem unteren Bereich des Zylinderkörpers (2), wobei ein erster Kolben (31, 310) und ein zweiter Kolben (41, 410) zur Ausführung einer Hubbewegung in dem ersten Zylinderhohlraum (3, 30) bzw. in dem zweiten Zylinderhohlraum (4, 40) ausgebildet sind;
- eine Trennwand (21, 210), die den ersten Zylinderhohlraum (3, 30) von dem zweiten Zylinderhohlraum (4, 40) trennt, wobei ein Raum zwischen dem ersten Kolben (31, 310) und der Trennwand (21, 210) eine obere Fluidkammer (32, 320) bildet und ein Raum zwischen dem zweiten Kolben (41, 410) und der Trennwand (21, 210) eine untere Fluidkammer (42, 420) bildet;
- eine Fluidpassage (52, 53, 520, 530), die zwischen der oberen Fluidkammer (32, 320) und der unteren Fluidkammer (42, 420) gebildet ist;
- eine Bremsfluid-Einlaßleitung (51, 510) und eine Bremsfluid-Auslaßleitung (54, 540) zum Zuführen und Ausleiten von Bremsfluid zu den Fluidkammern sowie aus den Fluidkammern (42, 420; 32, 320),
dadurch gekennzeichnet,
- daß die Bremsfluid-Einlaßleitung (51, 510) mit der unteren Fluidkammer (42, 420) verbunden ist und die Bremsfluid-Auslaßleitung (54, 540) mit der oberen Fluidkammer (32, 320) verbunden ist,
- daß eine automatische Bremsbackenspiel-Einstellvorrichtung (6) längs der Mittelachse des Zylinderkörpers (2) angeordnet ist, die die Trennwand durchsetzt und eine Einstellstange (63) aufweist, die in den zweiten Kolben (41) oder den ersten Kolben (310) eingeschraubt ist,
- daß die Fluidpassage eine axiale Nut (52, 520) entlang der Außenfläche der Einstellstange (63) und/oder entlang ihrer diese umschließenden Wand sowie eine Innenbohrung (53, 530) entlang der Mittelachse der Einstellstange (53) aufweist, wobei das untere Ende der Innenbohrung (53, 530) mit der Fluideinlaßleitung (51, 510) über die untere Fluidkammer (42, 420) kommuniziert und das obere Ende mit der Fluidauslaßleitung (54, 540) über die obere Fluidkammer (32, 320) kommuniziert.

2. Bremszylindereinheit nach Anspruch 1,
wobei die Fluidpassage (520, 530) zwischen der oberen Fluidkammer (320) und der unteren Fluidkammer (420) ferner eine Fluidleitung (550) durch die Trennwand (210) hindurch zwischen dem ersten Zylinderhohlraum (30) und dem zweiten Zylinderhohlraum (40) aufweist, wobei die Fluidleitung (550) parallel zu, jedoch im Abstand von der Mittelachse des Zylinderkörpers (2) angeordnet ist.

3. Verfahren zum Entlüften einer Bremszylindereinheit, die im wesentlichen senkrecht in einer Trommelbremsvorrichtung angebracht ist, wobei die Bremszylindereinheit folgendes aufweist:
einen Zylinderkörper (2) mit einem ersten Zylinderhohlraum (3, 20) und mit einem zweiten Zylinderhohlraum (4, 40) in dem oberen bzw. unteren Bereich des Zylinderkörpers (2),
einen ersten Kolben (31, 310) und einen zweiten Kolben (41, 410), die zur Ausführung einer Hubbewegung in dem ersten Zylinderhohlraum (3, 30) bzw. in dem zweiten Zylinderhohlraum (4, 40) untergebracht sind,
eine Trennwand (21, 210), die den ersten und den zweiten Zylinderhohlraum (3, 30; 4, 40) voneinander trennt, wobei der Raum zwischen dem ersten Kolben (31, 310) und der Trennwand (21, 210) eine obere Fluidkammer (32, 320) bildet und der Raum zwischen dem zweiten Kolben (41, 410) und der Trennwand (21, 210) eine untere Fluidkammer (42, 420) bildet, sowie
eine automatische Bremsbackenspiel-Einstellvorrichtung (6), die längs der Mittelachse des Zylinderkörpers angeordnet ist und die die Trennwand (21, 210) durchsetzt und eine Einstellstange (63) aufweist, wobei eine Fluidpassage (52, 53, 520, 530) in der Einstellstange (63) vorgesehen ist, um eine Fluidverbindung zwischen der oberen Fluidkammer (32, 320) und der unteren Fluidkammer (42, 420) zu ermöglichen,
wobei das Entlüftungsverfahren folgende Schritte aufweist:
a) Zuführen von Bremsfluid durch eine Bremsfluid-Einlaßleitung (51, 510) in den Zylinderkörper (2) der Bremszylindereinheit,
b) Bewirken, daß das Bremsfluid nach unten in die untere Fluidkammer (42, 420) strömt, und zwar bis zu einem Fluidpegel unterhalb der Einlaßöffnung der Bremsfluid-Einlaßleitung (51, 510),
c) Bewirken, daß das Bremsfluid von der unteren Fluidkammer (42, 420) nach oben durch die Fluidpassage (52, 53, 520, 530) in die obere Fluidkammer (32, 320) strömt, und zwar bis zum Erreichen eines zweiten Fluidpegels, der höher liegt als der erste Fluidpegel,
d) Ausleiten des Bremsfluids aus der oberen Fluidkammer (32, 320) bei dem höheren, zweiten Fluidpegel durch eine Bremsfluid-Auslaßleitung (54, 540), mit der eine Entlüftungseinrichtung (5, 50) verbunden ist, wobei in dem Bremsfluid enthaltene Luft aus dem Bremszylinder abgelassen wird.

## Revendications

1. Ensemble de cylindre de frein destiné à être monté sensiblement verticalement dans un dispositif de freinage à tambour, comprenant :
un corps de cylindre (2) ayant une première cavité de cylindre (3, 30) dans sa partie supérieure et une deuxième cavité de cylindre (4, 40) dans sa partie inférieure, un premier piston (31, 310) et un deuxième piston (41, 410) étant montés respectivement dans la première cavité de cylindre (3, 30) et dans la deuxième cavité de cylindre (4, 40),
une cloison (21, 210) qui sépare la première cavité de cylindre (3, 30) de la deuxième cavité de cylindre (4, 40), un espace entre le premier piston (31, 310) et la cloison (21, 210) formant une chambre à fluide supérieure (32, 320) et un espace entre le deuxième piston (41, 410) et la cloison (21, 210) formant une chambre à fluide inférieure (42, 420),
un passage de fluide (52, 53, 520, 530) formé entre la chambre à fluide supérieure (32, 320) et la chambre à fluide inférieure (42, 420),
un conduit d'entrée de fluide de frein (51, 510) et un conduit de sortie de fluide de frein (54, 540) pour l'envoi de fluide de frein aux chambres à fluide (42, 420 ; 32, 320) et l'évacuation de celui-ci des chambres à fluide,
caractérisé par le fait que
le conduit d'entrée de fluide de frein (51, 510) débouche dans la chambre à fluide inférieure (42, 420) et le conduit de sortie de fluide de frein (54, 540) part de la chambre à fluide supérieure (32, 320),
le long de l'axe du corps de cylindre (2) est placé un dispositif de réglage automatique du jeu des segments (6) qui traverse la cloison et comprend une tige de réglage (63) vissée dans le deuxième piston (41) ou dans le premier piston (310),
le passage de fluide comprend une rainure axiale (52, 520) faite le long de la surface extérieure de la tige de réglage (63) et/ou le long de la paroi entourant celle-ci, et un trou intérieur (53, 530) fait le long de l'axe de la tige de réglage (63),
l'extrémité inférieure du trou intérieur (53, 530) communiquant avec le conduit d'entrée de fluide (51, 510) par la chambre à fluide inférieure (42, 420) et l'extrémité supérieure communiquant avec la conduite de sortie de fluide (54, 540) par la chambre à fluide supérieure (32, 320).

2. Ensemble de cylindre de frein selon la revendication 1, dans lequel le passage de fluide (520, 530) entre la chambre à fluide supérieure (320) et la chambre à fluide inférieure (420) comprend en outre un conduit de fluide (550) qui traverse la cloison (210) située entre la première cavité de cylindre (30) et la deuxième cavité de cylindre (40) et est parallèle à l'axe du corps de cylindre (2) et espacé de celui-ci.

3. Procédé de purge d'air d'un ensemble de cylindre de frein monté sensiblement verticalement dans un dispositif de freinage à tambour, l'ensemble de cylindre de frein comprenant un corps de cylindre (2) ayant une première cavité de cylindre (3, 30) dans sa partie supérieure et une deuxième cavité de cylindre (4, 40) dans sa partie inférieure, un premier piston (31, 310) et un deuxième piston (41, 410) montés respectivement dans la première cavité de cylindre (3, 30) et dans la deuxième cavité de cylindre (4, 40), une cloison (21, 210) qui sépare la première cavité de cylindre (3, 30) de la deuxième cavité de cylindre (4, 40), l'espace entre le premier piston (31, 310) et la cloison (21, 210) formant une chambre à fluide supérieure (32, 320) et l'espace entre le deuxième piston (41, 410) et la cloison (21, 210) formant une chambre à fluide inférieure (42, 420), et un dispositif de réglage automatique du jeu des segments (6) qui est placé le long de l'axe du corps de cylindre, traverse la cloison (21, 210) et comprend une tige de réglage (63), un passage de fluide (52, 53, 520, 530) étant prévu dans cette tige de réglage (63) pour établir une communication entre la chambre à fluide supérieure (32, 320) et la chambre à fluide inférieure (42, 420),
ce procédé de purge d'air comprenant les opérations de :
a) envoyer du fluide de frein par un conduit d'entrée (51, 510) dans le corps de cylindre (2) de l'ensemble de cylindre de frein,
b) provoquer la descente du fluide de frein dans la chambre à fluide inférieure (42, 420) à un premier niveau situé au-dessous de l'orifice d'entrée du conduit d'entrée (51, 510),
c) provoquer la montée du fluide de frein par le passage de fluide (52, 53, 520, 530, 550) de la chambre à fluide inférieure (42, 420) à la chambre à fluide supérieure (32, 320) pour qu'il atteigne un deuxième niveau supérieur au premier,
d) évacuer le fluide de frein de la chambre à fluide supérieure (32, 320) au plus haut niveau de fluide supérieur par un conduit de sortie (54, 540) sur lequel est monté un purgeur d'air (5, 50),
l'air contenu dans le fluide de frein étant alors évacué du cylindre de frein.
